# EUROPÄISCHE PATENTANMELDUNG

(11) **EP 1 683 970 A2**
(43) Veröffentlichungstag der Anmeldung: **26.07.2006**
(21) Anmeldenummer: 06000786.1
(22) Anmeldetag: 14.01.2006
(51) Int. Cl.: F04C 2/107, F04C 15/00

(54) **Exzenterschneckenpumpe mit einem abgedeckten Anschlusselement**

(30) Priorität: 24.01.2005 DE 102005003399; 19.08.2005 DE 102005039612
(71) Anmelder: KNOLL MASCHINENBAU GMBH, 88348 Saulgau (DE)
(72) Erfinder: Vollmar, Wolfgang, 88299 Leutkirch/Allgäu (DE)
(74) Vertreter: Roth, Klaus

(57) **Zusammenfassung**

Es wird eine Exzenterschneckenpumpe mit einem Pumpengehäuse, in dem eine Rotoreinheit drehbar gelagert ist, die wenigstens zwei Rotorelemente (9, 10, 11) wie einen Schneckenrotor (10) und ein Antriebselement (9, 11) umfasst, wobei die Rotorelemente (9, 10, 11) drehfest miteinander verbunden sind, vorgeschlagen, wobei ein Lösen der drehfesten Verbindung (15) der Rotorelemente (9, 10, 11) wirkungsvoll verhindert wird. Dies wird erfindungsgemäß dadurch erreicht, dass ein Anschlusselement (20) für die drehfeste Verbindung (15) der beiden Rotorelemente (9, 10, 11) und ein Abdeckelement (16) vorgesehen sind, wobei das Anschlusselement (20) in der montierten Position durch das Abdeckelement (16) vom Innenraum (19) des Pumpengehäuses getrennt ist.

## Beschreibung

Die Erfindung betrifft eine Exzenterschneckenpumpe mit einem Pumpengehäuse, in dem eine Rotoreinheit drehbar gelagert ist, die wenigstens zwei Rotorelemente wie einen Schneckenrotor und ein Antriebselement umfasst, nach dem Oberbegriff des Anspruchs 1.

### Stand der Technik:

In den letzten Jahrzehnten hat die Exzenterschneckenpumpe ihre vielfältigen Einsatzmöglichkeiten unter Beweis gestellt und sich so einen festen Platz auf dem Pumpenmarkt gesichert. Ein wichtiger Einsatzbereich ist die Lebensmitteltechnik. Dort hat sich die Exzenterschneckenpumpentechnik etabliert und ist bei mediumsorientiertem Einsatz ein zuverlässiges Arbeitsgerät.

Im Rahmen der auch in der Lebensmittelindustrie fortschreitenden Automatisierung ganzer Prozesslinien, stellt sich an die eingesetzte Fördertechnik immer neue Anforderungen in Bezug auf kontinuierlichen Betriebsablauf. Hierbei werden besonders hohe Ansprüche an die mediumsschonende Förderung und an die Hygiene des Pumpsystems gestellt.

Die Exzenterschneckenpumpe bringt durch ihr Wirkprinzip viele Vorteile mit sich, wenn viskose und schwer empfindliche Medien gefördert werden sollen. Der im Allgemeinen als eingängige Schraube ausgeführte Rotor rotiert, über die Gelenkwelle mit dem Antrieb verbunden, in einem gewöhnlich zweigängigen Stator. Die sich aufgrund der Gangunterschiede zyklisch öffnenden und schließenden Kammern saugen das Medium ein. In der sich schließenden Kammer wird es in Richtung Druckseite gefördert und in den Anlagenteil mit höherem Druck ausgeschoben. Bei entsprechender Auswahl z.B. von Kammergröße, Pumpendrehzahl und Komponentenmaterialien kann erreicht werden, dass im Fördermedium enthaltene, weiche Stücke, wie z.B. Kirschen im Joghurt, unversehrt das Pumpsystem passieren.

Das Pumpsystem muss hohen Anforderungen an eine schonende Förderung der Medien sowie an die Reinigung der Gesamtanlage genügen. Hierbei dürfen keine Qualitätsverluste durch das Pumpsystem erzeugt werden und gegebenenfalls vorhandene Toträume müssen von Resten befreit sowie die Gesamtanlage muss in besonderen Anwendungsfällen, beispielsweise mittels Heißdampf, aseptisch ausgebildet werden. Dies ist im Allgemeinen neben dem Anwendungsgebiet der Lebensmitteltechnik z.T. auch für andere Anwendungsfälle von Relevanz.

Entsprechende Exzenterschneckenpumpen werden häufig motorisch, insbesondere elektromotorisch angetrieben. Zwischen dem Motor und dem Rotor ist beispielsweise ein als Rotorelement verwendetes Kardangelenk oder dergleichen angeordnet. Das Kardangelenk ist darüber hinaus in Strömungsrichtung des Fördermediums hinter der Einströmöffnung des Pumpengehäuses und innerhalb des Pumpengehäuses angeordnet, so dass dieses mit dem Medium in Berührung kommt und somit bei Bedarf entsprechend zu reinigen ist.

Häufig weisen handelsübliche Exzenterschneckenpumpen eine modulare Bauweise auf, wobei insbesondere ein Antriebsmodul mit der Antriebswelle, ein Modul, das insbesondere die Kardanwelle oder dergleichen sowie die Einströmöffnung umfasst, ein Rotormodul mit dem Rotor sowie ein Ausströmmodul mit der Ausströmöffnung des Pumpengehäuses vorgesehen ist. Bei entsprechend modularer Bauweise der Exzenterschneckenpumpe ist besonders von Vorteil, dass beispielsweise das Rotormodul an den entsprechenden Anwendungsfall anpassbar ist, wobei insbesondere die Länge des Rotors und/oder der Förderquerschnitt, die Ausbildung der Kammergrößen, der Komponentenmaterialien etc. variierbar sind. Entsprechendes trifft auch bezüglich der anderen Module zu, so dass große Leistungsbereiche und unzählige Anwendungsfälle realisierbar sind.

Beim Stand der Technik weisen entsprechende drehfeste Verbindungen zwischen den Rotorelementen eine vergleichsweise komplexe Geometrie auf, die einerseits Toträume und andererseits Ablagerungsbereiche für das Fördermedium erzeugen, so dass die Hygiene, insbesondere bei einem Wechsel des Fördermediums, nicht sicher gewährleistet werden kann.

Bei derzeit auf dem Markt befindlichen Exzenterschneckenpumpen ist teilweise bereits üblich, die drehfesten Verbindungen der Rotorelemente mit einer Steck- bzw. Stiftverbindung zu realisieren. Das bedeutet, dass das Kardangelenk sowohl mit der Antriebswelle der Pumpe als auch mit dem Rotor entsprechend drehfest verbunden ist.

Nachteilig bei der bislang gebräuchlichen Verbindungstechnik ist jedoch, dass im Betrieb sich die Stiftverbindung der Rotorelemente lösen kann, so dass das Pumpen des Fördermediums beeinträchtigt wird. Dies ist unter anderem im Lebensmittelbereich nicht tolerabel.

### Aufgabe und Vorteile der Erfindung:

Aufgabe der Erfindung ist es demgegenüber, eine Exzenterschneckenpumpe mit einem Pumpengehäuse, in dem eine Rotoreinheit drehbar gelagert ist, die wenigstens zwei Rotorelemente wie einen Schneckenrotor und ein Antriebselement umfasst, wobei die Rotorelemente drehfest miteinander verbunden sind, vorzuschlagen, wobei ein Lösen der drehfesten Verbindung der Rotorelemente wirkungsvoll verhindert wird.

Diese Aufgabe wird, ausgehend von einer Exzenterschneckenpumpe der einleitend genannte Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Exzenterschneckenpumpe dadurch aus, dass ein Anschlusselement für die drehfeste Verbindung der beiden Rotorelemente und ein Abdeckelement vorgesehen sind, wobei das Anschlusselement in der montierten Position durch das Abdeckelement vom Innenraum des Pumpengehäuses getrennt ist.

Mit Hilfe des erfindungsgemäßen Anschlusselementes und Abdeckelementes ist in vorteilhafter Weise eine lösbare, drehfeste Verbindung der beiden Rotorelemente realisierbar, wobei ein nachteiliges, selbsttätiges Lösen der Verbindung sicher verhindert wird. Darüber hinaus kann durch eine vorteilhafte Ausbildung des Abdeckelementes bzw. dessen Ausformung, eine vergleichsweise leicht zu reinigende, insbesondere totraumarme bzw. totraumfreie Verbindung der beiden Rotorelemente realisiert werden.

Grundsätzlich ist von Vorteil, die Auswahl der Materialien derart zu treffen, dass je nach Anwendungsfall, insbesondere im Lebensmittelbereich, keine nachteilige Verunreinigung des Fördermediums erfolgt. Beispielsweise sind im Lebensmittelbereich ausschließlich lebensmittelechte bzw. zugelassene Materialien wie entsprechende Edelstähle, Naturkautschuk, usw. zu verwenden. Vorzugsweise weisen die Materialien eine vergleichsweise hohe Temperaturbeständigkeit auf, so dass die Pumpe bzw. die drehfeste Verbindung mit Hilfe von Heißdampf oder dergleichen reinigbar ist. Weiterhin ist eine chemische Resistenz von Vorteil, so dass einerseits entsprechende Fördermedien gepumpt und andererseits entsprechende Reinigungsmittel zu keiner Beeinträchtigung der erfindungsgemäßen Verbindung bzw. Pumpe führen können.

Gemäß der Erfindung weist das vorteilhafte Abdeckelement insbesondere zwei Funktionen auf, so dass einerseits das Anschlusselement vom Innenraum bzw. vom Förderraum des Pumpengehäuses wirkungsvoll getrennt werden und andererseits das Anschlusselement sich nicht selbsttätig lösen kann. Das bedeutet, dass das Anschlusselement durch das Abdeckelement verliersicher gelagert ist. Hierdurch wird einerseits die Betriebssicherheit der Exzenterschneckenpumpe gemäß der Erfindung entscheidend erhöht und darüber hinaus die Reinigungsfreundlichkeit bzw. Hygieneanforderungen im Vergleich zum Stand der Technik deutlich verbessert bzw. besser erfüllbar.

In einer besonderen Weiterbildung der Erfindung ist wenigstens eine Dichtung zur Abdichtung des Anschlusselementes gegenüber dem Innenraum des Pumpengehäuses vorgesehen. Mit Hilfe dieser Maßnahme wird gewährleistet, dass ein Eindringen bzw. Unterwandern oder Ähnliches des Abdeckelementes in das Innere des Verbindungsbereichs bzw. unter das Abdeckelement durch das Fördermedium sicher verhindert wird. Dies verbessert zusätzlich die Reinigungsfreundlichkeit der erfindungsgemäßen Verbindung, wodurch besonders hohe hygienische Qualitätsanforderungen erreichbar sind.

Beispielsweise ist die Dichtung gemäß der Erfindung als Labyrinthdichtung insbesondere mit einer oder mehreren Labyrinthdichtungsnuten ausgebildet. In vorteilhafter Weise ist die Dimensionierung der Labyrinthdichtung an die Viskosität des Fördermediums angepasst. Bei einer Labyrinthdichtung ist von Vorteil, dass kein Fremdmaterial durch Abrieb oder dergleichen ins Fördermedium gelangen kann.

Vorzugsweise ist wenigstens ein insbesondere separates Dichtelement vorgesehen, das in vorteilhafter Weise zwischen dem Abdeckelement und wenigstens einem der Rotorelemente angeordnet ist. Ein Dichtelement gemäß der Erfindung gewährleistet eine besonders gute und betriebssichere Abdichtung des Abdeckelementes gegenüber dem Innenraum bzw. Förderraum des Pumpengehäuses. Hierdurch wird die Betriebssicherheit bzw. der Grad der Vermeidung von hygienisch bedenklichen Verunreinigungen weiter verbessert. Beispielsweise ist das Dichtelement als elastisch verformbares Dichtelement ausgebildet. Neben unterschiedlichsten Materialien ist ein Elastomermaterial für das Dichtelement besonders von Vorteil.

In einer vorteilhaften Ausführungsform der Erfindung sind wenigstens zwei Dichtungen zur beidseitigen Abdichtung der Endbereiche bzw. der Randbereiche des Abdeckelements vorgesehen. Das bedeutet, dass in axialer Richtung betrachtet, zumindest beide Enden des Abdeckelementes abgedichtet sind. Hierdurch wird die Abdichtung des Anschlusselementes bzw. der drehfesten Verbindung gegenüber dem Innenraum bzw. Förderraum des Pumpengehäuses besonders sicher gewährleistet.

Überstreicht das Abdeckelement in einer besonderen Variante der Erfindung lediglich einen Winkelbereich kleiner als 360 Grad (bezogen auf die Drehrichtung). Bei dieser Ausführungsvariante ist eine Abdichtung des Abdeckelementes im gesamten Randbereich von Vorteil. Das bedeutet, dass sowohl die beiden in axialer Richtung orientierten Endbereiche als auch die beiden in Drehrichtung orientierten Endbereiche des Abdeckelementes, insbesondere ohne Unterbrechung, abzudichten sind.

Grundsätzlich ist von Vorteil, wenigstens eine Dichtung an wenigstens einem Randabschnitt und/oder einem vollumfänglichen Rand bzw. einem Ende des Abdeckelementes anzuordnen. Vorzugsweise ist an beiden Randabschnitten und/oder vollumfänglich an beiden Rändern bzw. Enden des Abdeckelementes jeweils wenigstens eine Dichtung vorgesehen. Hiermit kann die Bildung eines Todraums für das zu pumpende Medium wirkungsvoll verhindert werden bzw. es wird gewährleistet, dass möglichst kein Unterwandern des zu pumpenden Mediums unter das Abdeckelement stattfinden kann.

In einer bevorzugten Variante der Erfindung ist zumindest eine Ausnehmung des Abdeckelementes für die Dichtung vorgesehen. Vorteilhafterweise ist die Ausnehmung an wenigstens einem Randabschnitt und/oder einem vollumfänglichen Rand bzw. einem Ende oder an beiden Randabschnitten und/oder vollumfänglich an beiden Rändern bzw. Enden des Abdeckelementes vorgesehen. Hiermit wird die Abdichtung des Abdeckelementes weiter verbessert.

In vorteilhafter Weise kann die Ausnehmung derart ausgebildet werden, dass die Dichtung das Abdeckelement hintergreift bzw. die Dichtung in radialer Richtung betrachtet wenigstens teilweise innerhalb des Abdeckelementes angeordnet ist.

Generell ist von Vorteil, die Dichtung gemäß der Erfindung derart vorteilhaft auszubilden, dass eine hermetische Abdichtung des Anschlusselementes gegenüber dem Innenraum bzw. Förderraum des Pumpengehäuses realisiert wird.

In einer bevorzugten Variante der Erfindung ist wenigstens ein Dichtelement als O-Ring mit einem Nutsitz ausgebildet. Eine entsprechend realisierte Dichtung ist einerseits besonders einfach herstellbar und andererseits kann auf bereits handelsübliche O-Ringe zurückgegriffen werden. Hierdurch ist eine wirtschaftlich besonders günstige Umsetzung der Erfindung möglich. Entsprechende O-Ringe sind für Anwendungen im lebensmitteltechnischen Bereich auch aus lebensmittelechten Materialien erhältlich.

Der erfindungsgemäße Nutsitz kann beispielsweise durch spanabhebende Verfahren wie Drehverfahren oder dergleichen hergestellt werden. Die entsprechende Nut kann beispielsweise in wenigstens eines der Rotorelemente und/oder in das Abdeckelement eingeformt werden.

Vorzugsweise ist der Nutsitz durch die randseitigen Außenflächen der miteinander zu verbindenden Rotorelemente beim Aneinanderfügen auszubilden. Ein entsprechend realisierter Nutsitz ist besonders einfach herstellbar. Beispielsweise weist eines der Rotorelemente eine in Richtung der Drehachse ausgerichtete ebene Außenfläche und das andere bzw. benachbarte Rotorelement weist eine in Drehachsenrichtung ausgebildete Abstufung bzw. Einkerbung, vorzugsweise im Umfangsbereich, auf. Hierdurch wird in besonders einfacher Weise ein U-förmiger Nutsitz verwirklicht. Zugleich wird hiermit neben der Abdichtung des Abdeckelementes auch eine Abdichtung der Berührungsflächen der beiden Rotorelemente verwirklicht.

Vorteilhafterweise ist wenigstens ein Dichtelement in der geschlossenen Position des Abdeckelements so verpresst, dass der Nutsitz vollständig ohne Randspalt geschlossen ist. Mit dieser Maßnahme wird gewährleistet, dass durch die Dichtung bzw. den Nutsitz kein Totraum bzw. kein relativ schlecht zu reinigender Raum bzw. Spalt gebildet wird. Hierdurch werden besonders hohe hygienische Anforderungen gerade auch im Lebensmittelbereich erfüllbar.

Vorzugsweise verklemmt das Dichtelement durch Pressung zwischen Rotorelement und Abdeckelement das Abdeckelement in dessen geschlossener Position und/oder das Dichtelement weist in der geschlossenen Position des Abdeckelementes wenigstens zum Teil einen Außendurchmesser und/oder einen Überstand auf, der größer als der Innendurchmesser des Abdeckelementes ist. Mit Hilfe zumindest eines dieser erfindungsgemäßen Merkmale ist eine vorteilhafte Fixierung des Abdeckelementes in der geschlossenen Position realisierbar. Hierdurch wird beispielsweise das selbsttätige Verstellen bzw. Lösen des Abdeckelementes von der geschlossenen Position wirkungsvoll verhindert. Dies erhöht die Sicherheit der Verbindung.

Darüber hinaus kann der Überstand bzw. die Verpressung des Dichtelementes ein in Richtung der Drehachse betrachtetes Hintergreifen des Abdeckelementes realisieren, so dass eine formschlüssige Fixierung verwirklicht wird. Dies verbessert zusätzlich die Sicherheit der Verbindung.

Vorteilhafterweise ist das Dichtelement elastisch, insbesondere federelastisch ausgebildet, so dass wenigstens zeitweise während der Montage/Demontage des Abdeckelementes das Dichtelement z.B. ein kleineres Volumen bzw. eine andere Form als im ursprünglichen Zustand und/oder im verpressten Zustand bzw. in der geschlossenen Position des Abdeckelementes aufweist.

Bei einem derartig verpressten Dichtelement bzw. durch den erfindungsgemäßen Überstand des Dichtelementes wird im Betrieb eine sichere Fixierung der Verbindung und zugleich die Lösbarkeit des Abdeckelementes sicher gewährleistet. Ein entsprechend gesichertes Abdeckelement kann bei als Elastomer ausgebildetem O-Ring ausschließlich durch ein stetiges, langanhaltendes Einwirken einer Abziehkraft aus der geschlossenen Position heraus gelöst werden. Im Betrieb ist jedoch eine derartig stetige Belastung des Abdeckelementes bzw. der Dichtung ausgeschlossen. Im Betrieb wird eine entsprechende Dichtung bzw. das Dichtelement durch die Rotation der Rotorelemente wechselnd bzw. zyklisch belastet, wobei der Widerstand des Dichtelementes gemäß der Erfindung nicht überwunden werden kann.

Vorzugsweise ist wenigstens eines der Dichtelemente als eine Dichtmanschette bzw. Dichtstulpe oder dergleichen ausgebildet. Dies bedeutet insbesondere, dass sich das Dichtelement wenigstens teilweise ärmel- bzw. hülsenartig in Richtung der Drehachse erstreckt. Hierdurch wird in vorteilhafter Weise die Dichtfunktion des Dichtelementes erweiterbar.

Darüber hinaus kann das Dichtelement bzw. die Dichtmanschette zugleich eine Schutzfunktion oder dergleichen z.B. des von diesem/dieser überstrichenen Abschnitts insbesondere des Rotorelementes und/oder des Abdeckelementes realisieren.

Generell ist eine Dichtmanschette bzw. Dichtstulpe oder dergleichen ausbildbarbar, die entsprechend den oben angeführten Erläuterungen einerseits zwischen dem Abdeckelement und einem der Rotorelemente angeordnet ist und/oder andererseits sich über das Abdeckelement und/oder sich über einen Abschnitt des Rotorelementes erstreckt.

Vor allem bei der Variante, bei der das Dichtelement bzw. die Dichtmanschette bzw. Dichtstulpe oder dergleichen zwischen dem Abdeckelement und einem der Rotorelemente angeordnet ist, kann das Dichtelement bzw. die Dichtmanschette in vorteilhafter Weise verklemmt bzw. fixiert werden.

Vorteilhafterweise ist die Dichtmanschette bzw. Dichtstulpe oder dergleichen als Abtrennelement zum Abtrennen wenigstens eines Abschnitts des Rotorelementes vom Innenraum des Pumpengehäuses ausgebildet. Hierdurch können besondere Abschnitte des entsprechenden Rotorelementes vor einem Kontakt mit dem zu pumpenden Betriebsmittel geschützt und/oder das zu pumpende Betriebsmittel bzw. der Innenraum des Pumpengehäuses vor einem Kontakt mit dem Rotorelement und/oder einem Hilfsstoff, wie z.B. Schmiermittel oder dergleichen, wirkungsvoll geschützt werden. Dies ist insbesondere bei Anwendungen im Pharmazie-, Lebensmittelbereich oder ähnlichen Anwendungen von ganz besonderem Vorteil. Eine entsprechende Reinigung der erfindungsgemäßen Pumpe wird hierdurch entscheidend verbessert bzw. vereinfacht.

Beispielsweise kann im durch die Dichtmanschette bzw. Dichtstulpe oder dergleichen vorzugsweise vollständig abgetrennten und z.B. als Gelenk, insbesondere als Kardangelenk, ausgebildeten Abschnitt des Rotorelementes eine Schmierung mit Schmierfett realisiert werden, ohne dass dies in den Innenraum des Pumpengehäuses gelangen bzw. ohne dass dies das zu pumpenden Betriebsmittel verunreinigen kann. Zudem wird hiermit erreicht, dass z.B. das Gelenk bzw. Kardangelenk in einem Fettpolster betrieben werden kann, so dass die Lebensdauer des Gelenks wesentlich verlängert wird.

In einer bevorzugten Variante der Erfindung ist die Dichtmanschette bzw. Dichtstulpe oder dergleichen zwischen zwei Abdeckelementen angeordnet. Hiermit wird einerseits gewährleistet, dass die Dichtmanschette bzw. Dichtstulpe oder dergleichen in vorteilhafter Weise an wenigstens zwei Stellen und/oder an beiden Enden sicher fixierbar ist.

Andererseits wird hiermit eine Dichtmanschette bzw. Dichtstulpe oder dergleichen realisiert, die sich im Wesentlichen über ein gesamtes Rotorelement erstreckt, wobei das Rotorelement vorzugsweise an beiden Enden z.B. jeweils mit Hilfe einer erfindungsgemäßen, drehfesten Verbindung mit einem Anschlusselement und einem separaten Abdeckelement befestigt ist. Hiermit kann ein als Gelenk, insbesondere als Kardangelenk, ausgebildetes Rotorelement nahezu vollständig von der Dichtmanschette bzw. Dichtstulpe oder dergleichen abgedeckt bzw. überstrichen werden. Dies gewährleistet eine vollständige Abtrennung des Rotorelementes bzw. Gelenkes vom Innenraum des Pumpengehäuses.

Vorzugsweise weist die Dichtmanschette bzw. Dichtstulpe oder dergleichen Mittel auf, die als Verdickung bzw. Verbreiterung, insbesondere wie z.B. ein O-Ring ausgebildet sind und/oder wie z.B. ein O-Ring insbesondere in einem vorteilhaften Nutsitz angeordnet bzw. eingebracht und vorzugsweise fixiert werden können. Beispielsweise ist wenigstens ein Ende der Dichtmanschette bzw. Dichtstulpe oder dergleichen entsprechend bzw. in der Art eines O-Rings ausgebildet.

Vorteilhafterweise sind die Mittel der Dichtmanschette bzw. Dichtstulpe oder dergleichen am Rand bzw. Ende des erfindungsgemäßen Abdeckelements angeordnet. Hiermit wird gewährleistet, dass möglichst kein Unterwandern des zu pumpenden Mediums unter das Abdeckelement stattfinden kann.

In einer vorteilhaften Variante der Erfindung weist wenigstens ein Rotorelement einen Führungsabschnitt auf, dessen Außendurchmesser kleiner ist als der Innendurchmesser des Abdeckelementes, so dass dieses axial insbesondere längs des Führungsabschnittes verschiebbar ist. Hierdurch kann während der Montage der drehfesten Verbindung bzw. des Abdeckelementes dieses von einer geöffneten Position, insbesondere nach dem Zusammenfügen der beiden Rotorelemente, axial in die geschlossene Position verstellt bzw. geführt werden. Hierbei ist das Abdeckelement in der geöffneten Position in vorteilhafter Weise im Bereich des Führungsabschnitts bzw. in radialer Richtung außen am Führungsabschnitt angeordnet. Entsprechend kann das Abdeckelement zum Lösen der Verbindung von der geschlossenen Position über den Führungsabschnitt in die geöffnete Position bewegt werden.

Grundsätzlich ist in der geöffneten Position des Abdeckelementes ein Zugang zum Anschlusselement bzw. zu den Verbindungsflächen der beiden Rotorelemente gewährleistet. Das führt dazu, dass in der geöffneten Position des Abdeckelementes die Montage bzw. Demontage des Anschlusselementes bzw. der drehfesten Verbindung besonders einfach realisierbar ist.

Das Abdeckelement kann in einer besonderen Ausführungsform der Erfindung als Abdeckkappe oder dergleichen ausgebildet werden. Beispielsweise überstreicht das Abdeckelement hierbei lediglich einen Teilbereich des Umfangs der Rotorelemente, d.h. das Abdeckelement umfasst bei dieser Variante einen in Drehrichtung betrachteten Winkelbereich kleiner als 360 Grad.

In einer bevorzugten Ausführungsform der Erfindung ist das Abdeckelement als Abdeckhülse ausgebildet. Die Abdeckhülse ist insbesondere als geschlossene Hülse bezogen auf den Umfang dieser ausgebildet, so dass die Abdeckhülse eine geschlossene, besonders stabile bzw. steife Ringform aufweist. Das bedeutet, dass das Abdeckelement als Hohlzylinder ausgebildet ist. Hierdurch wird die Länge bzw. Form der Außenkante des Abdeckelementes minimiert bzw. vereinfacht, was eine vorteilhafte Abdichtung des Abdeckelementes bzw. der drehfesten Verbindung ermöglicht. Darüber hinaus ist die Herstellung einer Abdeckhülse besonders einfach realisierbar, was die Wirtschaftlichkeit der Erfindung weiter verbessert.
In einer besonderen Weiterbildung der Erfindung ist das abgedeckte Anschlusselement als Riegel ausgebildet, der die zu verbindenden Rotorelemente wenigstens teilweise durchsetzt. Mit Hilfe eines entsprechenden Riegelelementes ist eine vorteilhafte formschlüssige Verbindung realisierbar, die einerseits große Drehmomente und andererseits einfach wieder lösbar ist. Zum Beispiel ist der Riegel als Bolzen, Schraube, Zapfen oder dergleichen ausgebildet.

Vorteilhafterweise ist das abgedeckte Anschlusselement ein Stift oder dergleichen, der in fluchtende Bohrungen der zu verbindenden Rotorelemente eingesetzt ist. Entsprechende Bohrungen und Stifte sind besonders einfach herstellbar, so dass sich die Herstellung besonders einfach realisieren lässt.

Generell kann die durch die zusammengefügten Rotorelemente gebildete Ausnehmung für das Anschlusselement sackartig bzw. als Sackloch verwirklicht werden, so dass das Anschlusselement lediglich von einer Seite in die Ausnehmung bzw. Bohrung einführbar und herausnehmbar ist. Bei dieser Variante kann die Ausnehmung in vorteilhafter Weise wenigstens teilweise als Gewindebohrung ausgebildet werden.

In einer vorteilhaften Variante der Erfindung ist die Ausnehmung, die durch die beiden zusammengesetzten Rotorelement gebildet wird, beidseitig offen ausgebildet. Beispielsweise ist die Ausnehmung eine durchgehende, quer zur Drehachse gerichtete Bohrung, so dass das Anschlusselement beispielsweise von einer Seite eingeführt und auf der anderen Seite hinaus bewegt werden kann. Die Verstellung eines entsprechend eingebrachten Anschlusselementes ist durch Druckbeaufschlagung von einer Seite besonders einfach realisierbar. Dies ist insbesondere bei einem als Stift oder dergleichen ausgebildeten Anschlusselement von besonderem Vorteil.

In einer bevorzugten Ausführungsform der Erfindung sind die beiden zu verbindenden Rotorelemente ein Schneckenrotor und eine Kardangelenkwelle. Alternativ oder in Kombination hierzu sind die zu verbindenden Rotorelemente eine Kardangelenkwelle und eine mit dem Antriebsmotor drehfest verbundene Antriebswelle. Gegebenenfalls sind die beiden drehfesten Verbindungen der Rotorelemente bzw. der Kardangelenkwelle weitgehend identisch bezüglich der Anschluss- und Abdeck-und/oder Dichtelemente ausgebildet, so dass sich die Wirtschaftlichkeit der Erfindung weiter verbessert.

Vorzugsweise ist der Antriebsmotor ein Elektromotor, der unter anderem besonders einfach steuerbar ist.

Grundsätzlich ist von Vorteil, die erfindungsgemäße Exzenterschneckenpumpe einschließlich des Antriebsmotors modular auszubilden, so dass das Pumpsystem besonders flexibel an unterschiedlichste Anwendungsfälle bzw. Anforderungen anpassbar ist. Beispielsweise können unterschiedlich lange Rotoreinheiten, unterschiedliche Materialien in Bezug auf die Rotorwelle und/oder das Rotorgehäuse, unterschiedliche Querschnitte der Pumpe bzw. der Rotoren, unterschiedliche Antriebsmotoren mit verschiedenen Leistungen, usw. vorgesehen werden.

### Ausführungsbeispiel:

Ein Ausführungsbeispiel der Erfindung ist in der Zeichnung dargestellt und wird anhand der Figuren nachfolgend näher erläutert.

Im Einzelnen zeigt:
- Figur 1: eine schematische Draufsicht auf eine Exzenterschneckenpumpe mit Elektromotor gemäß der Erfindung,
- Figur 2: einen schematischen Schnitt durch einen Teil der Exzenterschneckenpumpe gemäß der Erfindung,
- Figur 3: eine schematische Detailansicht im Schnitt gemäß der Figur 2 und
- Figur 4: eine schematische Detailansicht im Schnitt mit einer Dichtmanschette.

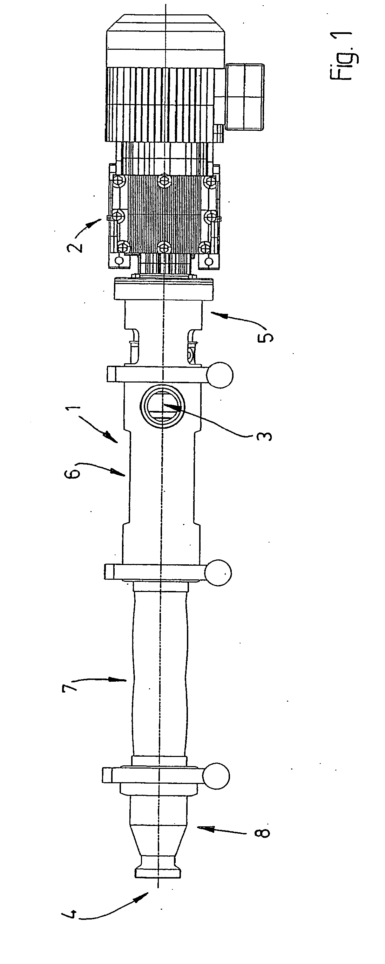

In Figur 1 ist schematisch eine Pumpe 1 in Draufsicht dargestellt, die von einem Elektromotor 2 angetrieben wird. Die Pumpe 1 weist einen Einlass 3 bzw. eine Einlassöffnung 3 und eine Auslassöffnung 4 bzw. einen Auslass 4 auf. Die Pumpenmotoreinheit ist modulartig aufgebaut, wobei der Motor 2 als Motormodul 2 ausgebildet und ein Antriebsmodul 5, ein Kardanmodul 6, ein Rotormodul 7 und ein Auslassmodul 8 vorgesehen sind. Zur Anpassung an unterschiedlichste Anwendungsfälle sind die Module 2, 5, 6, 7, 8 unterschiedlichst dimensionierbar bzw. mit unterschiedlichsten Materialien etc. ausbildbar sowie gegebenenfalls in unterschiedlichster Weise miteinander verbindbar.

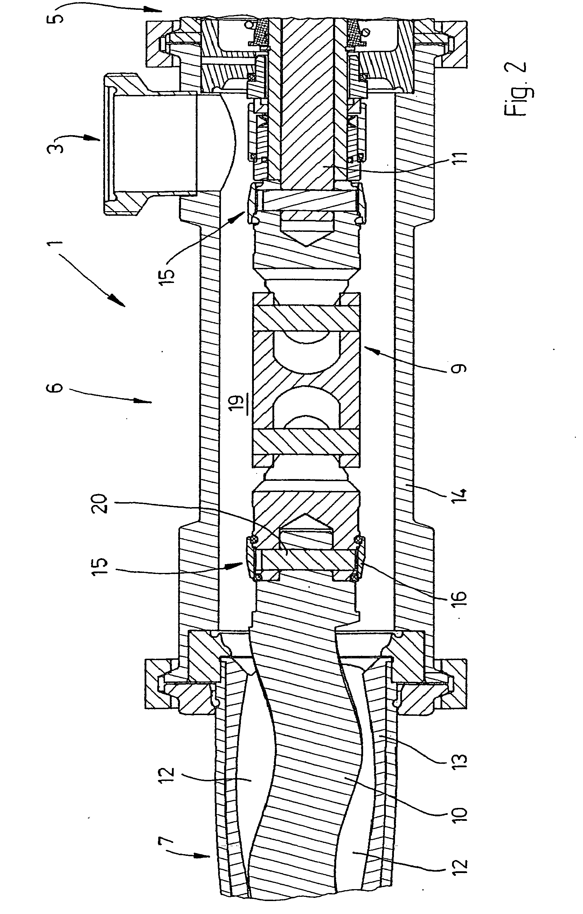

In Figur 2 ist schematisch ein detaillierter Schnitt längs der Drehachse durch die Pumpe 1 ausschnittsweise dargestellt, wobei der Schnitt um 90 Grad gegenüber der Draufsicht gemäß Figur 1 gedreht ist. Figur 2 umfasst insbesondere das Modul 6, in dem als Rotorelement gemäß der Erfindung eine Kardanwelle 9 und eine Rotorwelle 10 sowie eine Antriebswelle 11 vorgesehen sind. Ohne nähere Darstellung ist die Antriebswelle 11 mit dem Motor 2 drehfest verbunden.

Figur 2 verdeutlicht insbesondere die Ausbildung von Pumpkammern 12 zwischen der Rotorwelle 10 und einem Rotorgehäuse 13. Das Pumpgehäuse gemäß der Erfindung umfasst neben dem Rotorgehäuse 13 insbesondere auch ein Gehäuse 14 des Kardanmoduls 6.

Figur 2 verdeutlicht weiterhin die Ausbildung von Verbindungen 15 gemäß der Erfindung. Bei dieser Ausführungsvariante ist die Verbindung 15 gemäß der Erfindung an den gegenüberliegenden Enden der Kardanwelle 9 angeordnet.

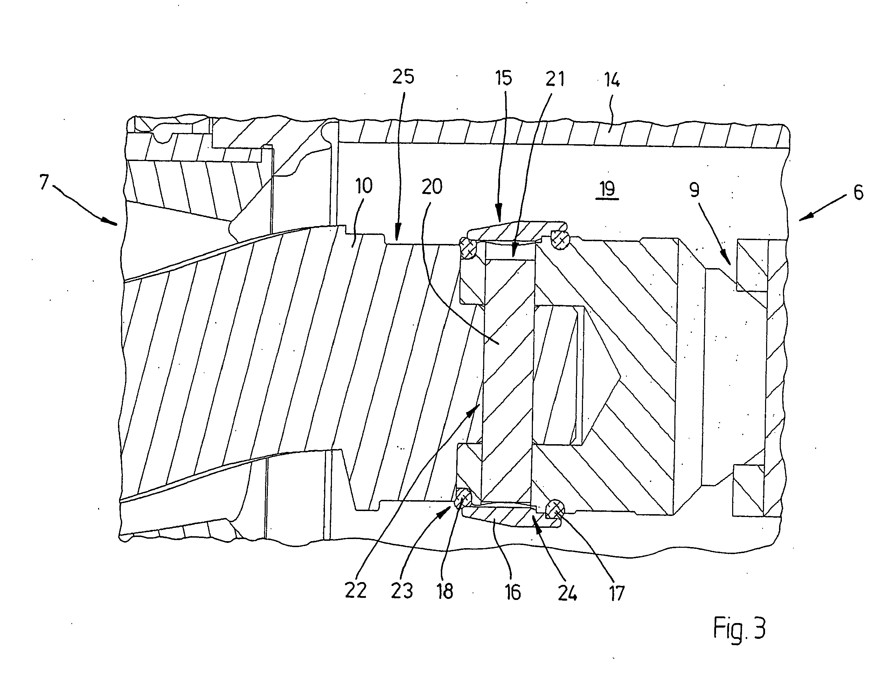

Zur Veranschaulichung der Verbindung 15 gemäß der Erfindung ist die Verbindung 15 zwischen der Kardanwelle 9 und der Rotorwelle 10 in Figur 3 schematisch dargestellt, wobei weitere Details veranschaulicht werden.

Die Verbindung 15 gemäß der Erfindung umfasst eine Abdeckhülse 16, die gegenüber der Kardanwelle 9 mit Hilfe eines O-Rings 17 und eines O-Rings 18 abgedichtet ist. Darüber hinaus nimmt der O-Ring 18 zugleich die Funktion wahr, die beiden Wellen 9 und 10 bzw. deren Berührungsflächen abzudichten. Grundsätzlich könnten hierfür auch zwei separate Dichtungen bzw. O-Ringe verwendet werden und/oder die Hülse 16 sich über die Berührungsflächen erstrecken.

Der O-Ring 17 ist in eine U-förmige Nut der Kardanwelle 9 eingelegt. Der O-Ring 18 ist in eine U-förmige Nut eingelegt, die durch das nebeneinander Anordnen bzw. Verbinden der Kardanwelle 9 mit der Rotorwelle 10 verwirklicht wird.

Durch die Hülse 16 sowie die beiden O-Ringe 17, 18 wird ein Innenraum 19 des Pumpengehäuses gegenüber einem Stift 20 bzw. Anschlusselement 20 gemäß der Erfindung hermetisch abgedichtet.

Der Stift 20 ist durch fluchtende Bohrungen 21 und 22 der Kardanwelle 9 bzw. Rotorwelle 10 angeordnet. Hierdurch entsteht eine drehfeste Verbindung der Kardanwelle 9 mit der Rotorwelle 10. Wie in Figur 2 deutlich wird, ist auch die Verbindung 15 zwischen der Kardanwelle 9 und der Antriebswelle 11 entsprechend ausgeführt.

Figur 3 verdeutlicht zudem, dass die beiden O-Ringe 17, 18 in der geschlossenen Position der Hülse 16 derart verpresst sind, dass die entsprechende Nut vollständig und insbesondere ohne Randspalt ausgefüllt sind.

Darüber hinaus ist der O-Ring 18 in dieser Position derart in die entsprechende Nut eingepresst, dass ein Überstand 23 des O-Rings 18 einen größeren Durchmesser als ein Innendurchmesser der Abdeckhülse 16 aufweist. Hierdurch wird eine formschlüssige Fixierung der Abdeckhülse 16 durch den O-Ring 18 realisiert, so dass eine besonders sichere Fixierung der Abdeckhülse 16 in der geschlossenen Position gemäß Figur 3 erfolgt.

Weiterhin wird in Figur 3 deutlich, dass sowohl die Abdeckhülse 16 als auch eines der beiden Rotorelemente 10, 9, in diesem Fall die Kardanwelle 9, jeweils eine Anschlagsfläche zur Ausbildung eines Anschlags 24 aufweist. Mit Hilfe des Anschlags 24 wird in vorteilhafter Weise gewährleistet, dass die geschlossene Position gemäß Figur 3 in definierter Art und Weise erfolgt. Dies wiederum gewährleistet die Sicherheit, dass der Überstand 23 des O-Rings 18 ausgebildet wird.

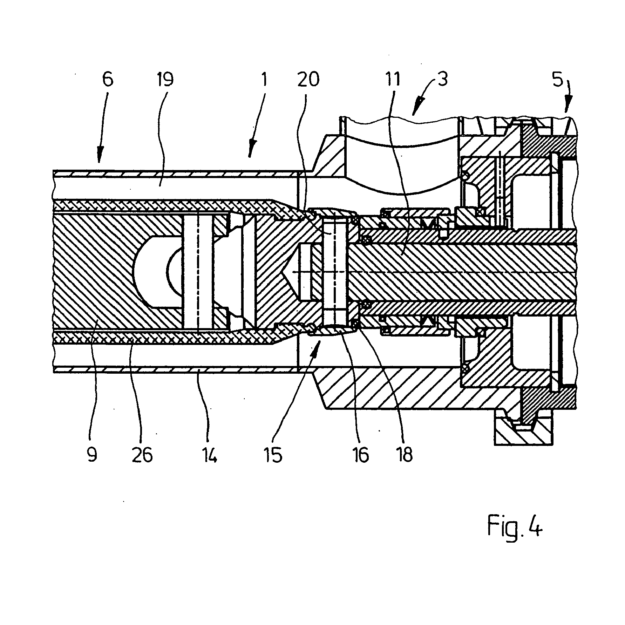

In Figur 4 ist eine Variante der Erfindung dargestellt, bei der im Unterschied zu den Varianten gemäß den Figuren 2 oder 3 als Dichtelement eine Dichtmanschette 26 verwendet wird.

Die Dichtmanschette 26 besteht im Wesentlichen aus einem Elastomer wie z.B. Gummi oder dergleichen und kann in dem dargestellten Fall über das Rotorelement 9 bzw. das Kardangelenk 9 einfach übergestülpt werden. Am Ende weist die Dichtmanschette 26 eine Verdickung auf, die im Wesentlichen dem O-Ring 17 entspricht und in die entsprechende Nut eingebracht werden kann. Hierdurch ist eine sichere Fixierung der Dichtmanschette 26 und zugleich ein sicheres Abdichten der Verbindung 15 bzw. Abdeckhülse 16 gewährleistet.

Ohne, dass dies näher dargestellt ist, kann die Dichtmanschette 26 an beiden Enden eine in zuvor beschriebener Weise vorgesehene Verdickung aufweisen und zwischen zwei Verbindungen 15 angeordnet werden und/oder den Abschnitt bzw. z.B. das Rotorelement 9 zwischen zwei Verbindungen 15 wirkungsvoll gegenüber dem Innenraum abtrennen. Es kann ein hermetisch abgedichteter Bereich zwischen zwei Verbindungen 15 in vorteilhafter Weise realisiert werden. Hierdurch wird z.B. eine Verunreinigung des Rotorelementes 9 bzw. des Kardangelenks 9 durch das zu pumpende Betriebsmittel vorteilhaft verhindert. Dies verbessert die Reinigungsfähigkeit der Pumpe 1 bzw. des vergleichsweise komplex geformten Kardangelenks 9.

Andererseits kann das Kardangelenk 9 mit einem Schmierfett oder dergleichen betrieben werden, was den Verschleiß entscheidend reduziert und somit die Lebensdauer deutlich verlängert bzw. die Wartung verbessert.

Grundsätzlich ist gemäß der Erfindung von Vorteil, dass eines der Rotorelemente 9, 10, 11 je Verbindung 15 einen Anschlag 24 des Abdeckelementes 16 aufweist und das andere Rotorelement 9, 10, 11 der Verbindung 15 einen Führungsabschnitt 25 aufweist. In der in Figur 3 dargestellten Variante weist die Rotorwelle 10 den entsprechenden Führungsabschnitt 25 auf, da hier die Kardanwelle 9 den Anschlag 24 umfasst. Der Führungsabschnitt 25 weist einen kleineren Außendurchmesser als der Innendurchmesser der Hülse 16 auf. Hierdurch wird zur Montage der Abdeckhülse 16 es möglich, dass diese Abdeckhülse 16, in axialer Richtung betrachtet, aus der geschlossenen Position gemäß Figur 3 bzw. 4 in eine geöffnete Position (ohne nähere Darstellung) verstellt bzw. verschoben werden kann. Hierbei wird der Überstand 23 durch eine insbesondere stetige, gleichmäßige Zugbelastung der Abdeckhülse 16 überwunden. Hierfür ist der O-Ring 18, wie insbesondere auch der O-Ring 17 bzw. die Dichtmanschette 26, verformbar, insbesondere gummielastisch verformbar.

Ohne nähere Darstellung wird durch Figur 3 bzw. 4 nachvollziehbar, dass zur Demontage der Verbindung 15 die Abdeckhülse 16 in die nicht näher dargestellte, geöffnete Position verschoben werden kann, so dass der Stift 20 aus den Bohrungen 21, 22 heraus genommen werden kann.

Beispielsweise zu Reinigungszwecken und/oder zur Reparatur bzw. Wartung der Pumpe 1 kann eine entsprechende Demontage der Verbindung 15 vorgesehen werden. Hierbei ist insbesondere auch der modulare Aufbau der Pumpe 1 bzw. des Pumpensystems 1, 2 von Vorteil. Die Verbindungen der Module 2, 5, 6, 7, 8 sind insbesondere als lösbare Verbindungen auszubilden.

Generell kann durch den Einsatz der Hülse 16 ein Herauswandern der zur Drehmomentenübertragung eingesetzten Stifte 20 wirkungsvoll vermieden werden. Die Hülse 16 und ihre Abdichtelemente bzw. O-Ringe 17, 18 bzw. Dichtmanschette 26 sind derart ausgeführt, dass sie unter keinen Umständen als lose Teile in den Produktraum bzw. Innenraum 19 der Pumpe 1 geraten können. Dies wird unter anderem durch die zylindrische Form bzw. Ringform der Einzelteile 16, 17, 18, 26, aber auch durch das vorteilhafte Zusammenspiel verschiedener Durchmesser und/oder Querschnitte der Wellen 9, 10, 11 sowie Abdeckhülse 16 und der O-Ringe 17, 18 bzw. Dichtmanschette 26 erreicht.

Durch die vorteilhafte dimensionierte und sehr genau definierte Verpressung der O-Ringe 17, 18 bzw. Dichtmanschette 26 in axialer und/oder radialer Richtung, wird eine hohe Sicherung der Hülse 16 in axialer Richtung erreicht. Die Endlage bzw. die geschlossene Position der Schiebehülse bzw. Abdeckhülse 16 wird durch einen Festanschlag bzw. Anschlag 24 definiert. Bei der Montage der Hülse 16 stellt sich mit Erreichen des Anschlags 24 folgende Situation dar.
- Durch die axiale Verpressung von O-Ring 18 durch die Anschlagsflächen der Rotorwelle 10 und der dazugehörigen Anschlussteile wird der O-Ring 18 bei der Montage durch Volumenverdrängung in radialer Richtung vorgespannt. Dieser Vorgang bewirkt bereits bei der Montage ein merkbares Verklemmen der Hülse 16.
- Ist die definierte Endlage bzw. geschlossene Position durch den Anschlag 24 an den Endanschlägen erreicht, findet in dem Bereich des O-Rings 18, der hierbei teilweise offen zum Innenraum 19 ausgebildet ist, eine Entspannung statt. Durch diese Entspannung findet an dieser Stelle eine örtliche Vergrößerung im Außendurchmesser des O-Rings 18 statt, so dass der Überstand 23 gebildet wird.
- Die Anlehnflächen des O-Rings 18 liegen hierbei tangential zu den Anschlussflächen des Andrehdurchmessers der Rotorwelle 10 bzw. Innendurchmesser der Hülse 16 an, wodurch eine entsprechend gute Reinigbarkeit erzielt werden kann.
- Beim O-Ring 17 bzw. bei der Dichtmanschette 26 stellt sich bei Erreichen der Endlage bzw. der geschlossenen Position der Hülse 16 eine definierte radiale Verpressung ein, so dass auch hier eine Verklemmung zwischen O-Ring 17 bzw. Dichtmanschette 26 und Hülse 16 erreicht wird. Auch hier liegen die Anlehnflächen tangential an den Anschlussflächen des Anschlussteils an, wodurch auch hier eine entsprechend gute Reinigbarkeit erzielt werden kann.
- Die Form der Hülse 16 ist durch vorteilhafte Formgebung so gestaltet, dass insgesamt gute Reinigungsergebnisse erzielt werden können. Vorteilhaft ist hierbei die im Wesentlichen über die Gesamtbreite der Hülse 16 gestaltete Phase, die trotz strömungsabgewandter Seite des O-Rings 18, eine gute Reinigung zulässt.
- Durch die Abrundung möglichst aller Ecken findet eine entsprechend schonende Verpressung der O-Ring-Abdichtung 17, 18 bzw. Dichtmanschette 26 statt. Andererseits wird eine ausgezeichnete Umspülung der Ecken gewährleistet, was wiederum die Reinigungsfähigkeit der Verbindung 15 verbessert.

Die in den Figuren gezeigte Anordnung der Einlass-Seite und der Auslass-Seite zeigt beispielhaft eine mögliche Förderrichtung der Exzenterschneckenpumpe, wobei die Förderrichtung prinzipiell auch entgegengesetzt eingerichtet werden kann, wenn die Drehrichtung der Rotoreinheit entsprechend umgekehrt wird.

### Bezugszeichenliste:

- 1: Pumpe
- 2: Motor
- 3: Einlass
- 4: Auslass
- 5: Modul
- 6: Modul
- 7: Modul
- 8: Modul
- 9: Welle
- 10: Welle
- 11: Welle
- 12: Kammer
- 13: Rotorgehäuse
- 14: Gehäuse
- 15: Verbindung
- 16: Hülse
- 17: O-Ring
- 18: O-Ring
- 19: Innenraum
- 20: Stift
- 21: Bohrung
- 22: Bohrung
- 23: Überstand
- 24: Anschlag
- 25: Führungsabschnitt
- 26: Dichtmanschette

## Patentansprüche

1. Exzenterschneckenpumpe mit einem Pumpengehäuse, in dem eine Rotoreinheit drehbar gelagert ist, die wenigstens zwei Rotorelemente (9, 10, 11) wie einen Schneckenrotor (10) und ein Antriebselement (9) umfasst, wobei die Rotorelemente (9, 10, 11) drehfest miteinander verbunden sind, **dadurch gekennzeichnet, dass** ein Anschlusselement (20) für die drehfeste Verbindung (15) der beiden Rotorelemente (9, 10, 11) und ein Abdeckelement (16) vorgesehen sind, wobei das Anschlusselement (20) in der montierten Position durch das Abdeckelement (16) vom Innenraum (19) des Pumpengehäuses getrennt ist.

2. Pumpe nach Anspruch 1 **dadurch gekennzeichnet, dass** wenigstens eine Dichtung (17, 18, 26) zur Abdichtung des Anschlusselementes (20) gegenüber dem Innenraum (19) des Pumpengehäuses vorgesehen ist.

3. Pumpe nach einem der vorgenannten Ansprüche **dadurch gekennzeichnet, dass** ein Dichtelement (17, 18, 26) zwischen dem Abdeckelement (16) und wenigstens einem der Rotorelemente (9, 10, 11) angeordnet ist.

4. Pumpe nach einem der vorgenannten Ansprüche **dadurch gekennzeichnet, dass** wenigstens zwei Dichtungen (17, 18, 26) zur beidseitigen Abdichtung der Endbereiche des Abdeckelementes vorgesehen sind.

5. Pumpe nach einem der vorgenannten Ansprüche **dadurch gekennzeichnet, dass** wenigstens ein Dichtelement (17, 18, 26) als O-Ring (17, 18) mit einem Nutsitz ausgebildet ist.

6. Pumpe nach einem der vorgenannten Ansprüche **dadurch gekennzeichnet, dass** der Nutsitz durch die randseitigen Außenflächen der miteinander zu verbindenden Rotorelemente (9, 10, 11) beim Aneinanderfügen gebildet ist.

7. Pumpe nach einem der vorgenannten Ansprüche **dadurch gekennzeichnet, dass** wenigstens ein Dichtelement (17, 18, 26) in der geschlossenen Position des Abdeckelementes (16) so verpresst ist, dass der Nutsitz vollständig ohne Randspalt geschlossen ist.

8. Pumpe nach einem der vorgenannten Ansprüche **dadurch gekennzeichnet, dass** das Dichtelement (17, 18, 26) durch Pressung zwischen Rotorelement (9, 10, 11) und Abdeckelement (16) das Abdeckelement (16) in dessen geschlossenen Position verklemmt.

9. Pumpe nach einem der vorgenannten Ansprüche **dadurch gekennzeichnet, dass** wenigstens eines der Dichtelemente (17, 18, 26) als eine Dichtmanschette (26) ausgebildet ist.

10. Pumpe nach einem der vorgenannten Ansprüche **dadurch gekennzeichnet, dass** die Dichtmanschette (26) als Abtrennelement (26) zum Abtrennen wenigstens eines Abschnitts des Rotorelementes (9, 10, 11) vom Innenraum (19) des Pumpengehäuses ausgebildet ist.

11. Pumpe nach einem der vorgenannten Ansprüche **dadurch gekennzeichnet, dass** die Dichtmanschette (26) zwischen zwei Abdeckelementen (16) angeordnet ist.

12. Pumpe nach einem der vorgenannten Ansprüche **dadurch gekennzeichnet, dass** wenigstens eines der Rotorelemente (9, 10, 11) einen Führungsabschnitt (25) aufweist, dessen Außendurchmesser kleiner ist als der Innendurchmesser des Abdeckelements (16), so dass dieses axial verschiebbar ist.

13. Pumpe nach einem der vorgenannten Ansprüche **dadurch gekennzeichnet, dass** wenigstens eines der Rotorelemente (9, 10, 11) einen Endanschlag (24) für die geschlossene Position des Abdeckelementes (16) aufweist.

14. Pumpe nach einem der vorgenannten Ansprüche **dadurch gekennzeichnet, dass** das Abdeckelement (16) eine Abdeckhülse (16) ist.
